# EUROPÄISCHE PATENTSCHRIFT

(11) **EP 2 788 611 B1**
(45) Veröffentlichungstag und Bekanntmachung des Hinweises auf die Patenterteilung: **07.09.2016**
(21) Anmeldenummer: 12852451.9
(22) Anmeldetag: 06.12.2012
(51) Int. Cl.: F02M 37/00, F02M 55/02, F02M 61/16, F02M 55/00, F16L 25/12, F16L 21/04

(54) **VERBINDUNG VON HOCHDRUCKMEDIUM FÜHRENDEN KOMPONENTEN EINER EINSPRITZVORRICHTUNG FÜR BRENNKRAFTMASCHINEN**
CONNECTION OF COMPONENTS, CARRYING HIGH-PRESSURE MEDIUM, OF AN INJECTION DEVICE FOR INTERNAL COMBUSTION ENGINES
LIAISON POUR ÉLÉMENTS GUIDANT UN MILIEU À PRESSION ÉLEVÉE, D'UN DISPOSITIF D'INJECTION DESTINÉ À UN MOTEUR À COMBUSTION INTERNE

(30) Priorität: 09.12.2011 AT 18052011
(43) Veröffentlichungstag der Anmeldung: 15.10.2014
(73) Patentinhaber: Robert Bosch GmbH, 70469 Stuttgart-Feuerbach (DE)
(72) Erfinder: GRASPEUNTNER, Christian, A-5400 Hallein (AT); STIPEK, Theodor, A-5020 Salzburg (AT)
(86) Internationale Anmeldenummer: PCT/AT2012/000308
(87) Internationale Veröffentlichungsnummer: WO 2013/082640

(56) Entgegenhaltungen:
- EP-A1- 1 653 076
- WO-A1-2009/033304
- DE-A1- 10 143 740
- DE-A1-102004 032 203
- DE-A1-102004 053 275
- DE-C1- 19 614 980
- GB-A- 2 323 903
- US-A1- 2005 144 558
- THOMAS AUF DEM BRINKE ET AL: "Plasmagestützte Oberflächenveredelung, Passage", 1. Januar 2006 (2006-01-01), PLASMAGESTÜTZTE OBERFLÄCHENVEREDELUNG : NITRIEREN, NITROCARBURIEREN UND OXIDIEREN VON STAHL-, GUSS- UND SINTERWERKSTOFFEN; [DIE BIBLIOTHEK DER TECHNIK ; BD. 285], VERLAG MODERNE INDUSTRIE, DE, PAGE(S) 1 - 71, XP002679944, ISBN: 978-3-937889-29-0 Seite 36, Zeile 35 - Seite 37, Zeile 9

## Beschreibung

Die Erfindung betrifft eine Verbindung von Hochdruckmedium führenden Komponenten einer Einspritzvorrichtung für Brennkraftmaschinen, umfassend eine erste Komponente und eine zweite Komponente, deren Oberflächen gehärtet sind und die einander zugewandte Dichtflächen aufweisen.

GB 2323903 offenbart eine solche Verbindung nach dem Stand der Technik.

Bei Komponenten von Einspritzausrüstungen wie insbesondere Einspritzvorrichtungen für Brennkraftmaschinen, bei denen besonders hohe Drücke im Bereich von 2000 bar und mehr auftreten, werden häufig nitrierte Bauteile verwendet, die eine erhöhte Verschleißfestigkeit aufweisen. Häufig werden die in solchen Komponenten vorgesehenen Dichtflächen als Kegelabdichtungen oder Beißkantenabdichtungen ausgeführt, wobei jedoch die hohe Härte der nitrierten Bauteile, die dadurch recht spröde sind, häufig zu Rissen in der Oberfläche der Komponenten führt. Das aus dem Stand der Technik bekannte Abdecken von Bereichen, die nicht nitriert werden sollen, ist bei derartigen Dichtflächen bzw. Dichtkanten nicht ohne weiteres möglich bzw. nicht effektiv, da der Stickstoff beim Nitrieren tief in das Material eindringt und in die abgedeckten Bereiche diffundiert, wodurch auch in den abgedeckten Bereichen eine Nitridbildung zu beobachten ist. Auch ein nachträgliches Abtragen der nitrierten Schichten löst das Problem der Versprödung nicht, da die Kernhärte der bearbeiteten Komponenten relativ groß ist, und eine plastische Verformung der Komponenten, die mit ihren Dichtflächen aufeinander gepresst werden, in der Regel nicht erreicht werden kann.

Der Erfindung liegt daher die Aufgabe zugrunde, eine Verbindung der eingangs genannten Art dergestalt zu verbessern, dass zum einen nitrierte Bauteile zur Hintanhaltung von Verschließ bei Hochdruckkomponenten zum Einsatz gelangen können, wobei jedoch gleichzeitig Versprödungen und daraus folgende Materialschäden an den Dichtflächen vermieden werden sollen.

Zur Lösung dieser Aufgabe ist eine Verbindung der eingangs genannten Art erfindungsgemäß dadurch gekennzeichnet, dass die einander zugewandten Dichtflächen der Komponenten mit Dichtflächen eines zwischen der ersten und der zweiten Komponente angeordneten, eine Durchgangsbohrung aufweisenden Zwischenstückes zusammenwirken, das eine geringere Härte aufweist als die Dichtflächen der ersten und zweiten Komponente, wobei von zwei miteinander zusammenwirkenden Dichtflächen jeweils eine Dichtfläche eine Dichtkante aufweist. Dadurch, dass zwischen den Dichtflächen der miteinander zu verbindenden Komponenten ein Zwischenstück angeordnet ist, welches eine geringere Härte aufweist als die Dichtflächen der beiden Komponenten, kann für das Zwischenstück ein Material verwendet werden, das beim Zusammenfügen der Verbindung eine plastische Deformation der Dichtflächen des Zwischenstücks erlaubt, wenn die Dichtkante in axialer Richtung in die entsprechende Dichtfläche gedrückt wird. Gleichzeitig sind jedoch die beanspruchten Komponenten weiterhin nitriert ausgeführt, sodass keine Einbußen hinsichtlich des Verschleißes hingenommen werden müssen und gleichzeitig das Problem der Rissbildung eliminiert wird. Das Zwischenstück fungiert bei der vorliegenden Erfindung gleichsam als Dichtungsring, der durch das Aufeinanderpressen der dichtend miteinander zu verbindenden Bauteile komprimiert und plastisch verformt wird.

In besonders einfacher Weise ist die Erfindung bevorzugt dahingehend weitergebildet, dass der Rand einer kegeligen Dichtfläche die Dichtkante ausbildet, was hinsichtlich des Aufwandes bzw. der Kosten bei der Herstellung besonders günstig ist.

Wie bereits erwähnt, fungiert das Zwischenstück wie ein deformierbarer Dichtring, weshalb das Zwischenstück bevorzugt keine Oberflächenhärtung aufweist.

Erfindungsgefäß ist die erste und die zweite Komponente einschließlich deren einander zugewandten Dichtflächen nitriert.

Wenn, wie dies einer bevorzugten Ausführungsform der vorliegenden Erfindung entspricht, die von umlaufenden Dichtkanten gebildeten Dichtringe auf den jeweiligen Komponenten denselben Durchmesser aufweisen, die jeweiligen Dichtkanten somit in der Einbausituation einander exakt gegenüberliegen, so wird eine gerade Kraftdurchleitung durch das Zwischenstück erreicht, was hinsichtlich der Statik der erfindungsgemäßen Verbindung vorteilhaft ist.

Um das Zwischenstück bei der Fertigung in einfacher Weise festzulegen, ist die Erfindung mit Vorteil dahingehend weitergebildet, dass das Zwischenstück einen axialen Bereich mit geringerem Außendurchmesser aufweist, der in eine das Hockdruckmedium führende Bohrung der ersten Komponente unter Ausbildung eines Presssitzes oder Schiebesitzes eingeführt ist. Das Zwischenstück wird somit in die erste Komponente eingesetzt, woraufhin die Verbindung mit der zweiten Komponente erfolgt.

Das Zwischenstück kann neben seiner Dichtfunktion auch noch weitere Aufgaben erfüllen, und die Erfindung ist in diesem Zusammenhang bevorzugt dahingehend weitergebildet, dass das Zwischenstück einen Federteller für eine Feder eines Ventils einer Einspritzdüse ausbildet.

Gemäß einer weiteren bevorzugten Ausführungsform der vorliegenden Erfindung bildet das Zwischenstück einen Hubanschlag für ein Ventilglied eines Ventils einer Einspritzdüse aus.

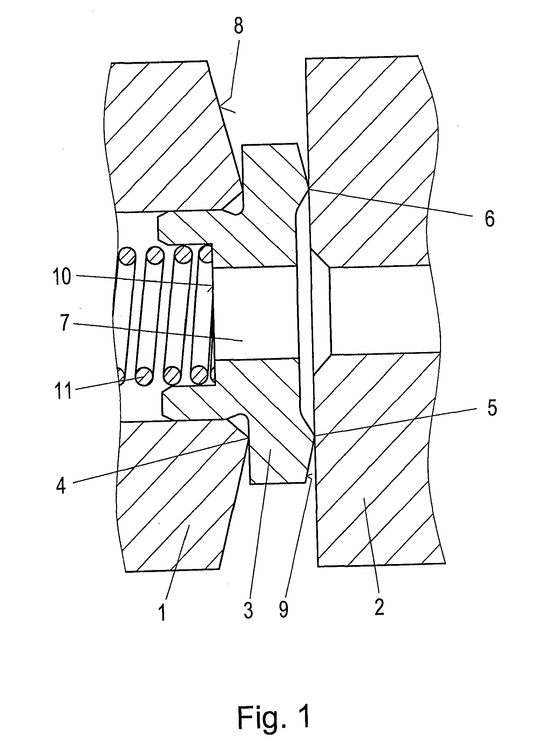

Die Erfindung wird nachfolgend anhand eines in der Zeichnung schematisch dargestellten Ausführungsbeispiels näher erläutert. In Fig. 1 ist eine erfindungsgemäße Verbindung dargestellt, wobei die erste Komponente mit 1 bezeichnet ist. Die erste Komponente 1 ist druckdicht mit der zweiten Komponente 2 verbunden, wobei erfindungsgemäß zwischen den beiden Komponenten 1 und 2, deren Oberflächen zur Vermeidung von Verschleiß durch hohe Drücke nitriert sind, ein Zwischenstück 3 aus einem weicheren Material beispielsweise Stahl oder Kupfer angeordnet ist. Mit 4 und 5 sind Dichtflächen auf den beiden Komponenten 1 und 2 bezeichnet, die jeweils mit entsprechenden Dichtflächen am Zwischenstück 3 zusammenwirken. Gemäß der vorliegenden Erfindung weist jeweils eine Dichtfläche von zwei miteinander zusammenwirkenden Dichtflächen eine Dichtkante 6 auf, sodass sich das relativ weiche Material, des Zwischenstücks 3 plastisch verformt, wodurch eine optimale Dichtwirkung erzielt wird. Die beiden Komponenten 1 und 2, die als nitrierte Komponenten sehr spröde sind, sind somit optimal vor Verschleiß geschützt, wobei eine plastische Verbindung der beiden Komponenten durch das Zwischenstück 3 erreicht wird. Durch die Durchgangsbohrung 7 kann Druckmedium durch das Zwischenstück 3 von einer Komponente zur anderen fließen.

In Fig. 1 ist weiters erkennbar, dass die Dichtkanten 6 jeweils vom Rand einer kegeligen Dichtfläche 8 bzw. 9 gebildet wird, wobei die von umlaufenden Dichtkanten (6) gebildeten Dichtringe auf den jeweiligen Komponenten (1,2) denselben Durchmesser aufweisen, wodurch die Dichtkanten, die den Rand der Durchgangsbohrung 7 umfangsmäßig umgeben, einander exakt gegenüberliegen, sodass eine gerade Kraftdurchleitung durch das Zwischenstück 3 erreicht wird. An der Position 10 ist erkennbar, dass das Zwischenstück einen Federteller für eine Feder 11 eines Ventils ausbildet.

## Patentansprüche

1. Verbindung von Hochdruckmedium führenden Komponenten einer Einspritzvorrichtung für Brennkraftmaschinen, umfassend eine erste Komponente und eine zweite Komponente, deren Oberflächen gehärtet sind und die einander zugewandte Dichtflächen aufweisen, wobei die einander zugewandten Dichtflächen (4,5) der Komponenten (1,2) mit Dichtflächen eines zwischen der ersten und der zweiten Komponente angeordneten, eine Durchgangsbohrung (7) aufweisenden Zwischenstückes (3) zusammenwirken, das eine geringere Härte aufweist als die Dichtflächen (4,5) der ersten und zweiten Komponente (1,2), wobei von zwei miteinander zusammenwirkenden Dichtflächen jeweils eine Dichtfläche eine Dichtkante (6) aufweist, **dadurch gekennzeichnet dass** die erste und die zweite Komponente (1,2) einschließlich deren einander zugewandten Dichtflächen (4,5) nitriert sind.

2. Verbindung nach Anspruch 1, **dadurch gekennzeichnet, dass** der Rand einer kegeligen Dichtfläche (8,9) die Dichtkante (6) ausbildet.

3. Verbindung nach Anspruch 1 oder 2, **dadurch gekennzeichnet, dass** das Zwischenstück (3) keine Oberflächenhärtung aufweist.

4. Verbindung nach einem der Ansprüche 1 bis 3, **dadurch gekennzeichnet, dass** die von umlaufenden Dichtkanten (6) gebildeten Dichtringe auf den jeweiligen Komponenten (1,2) denselben Durchmesser aufweisen.

5. Verbindung nach einem der Ansprüche 1 bis 4, **dadurch gekennzeichnet, dass** das Zwischenstück (3) einen axialen Bereich mit geringerem Außendurchmesser aufweist, der in eine das Hockdruckmedium führende Bohrung der ersten Komponente unter Ausbildung eines Presssitzes oder Schiebesitzes eingeführt ist.

6. Verbindung nach einem der Ansprüche 1 bis 5, **dadurch gekennzeichnet, dass** das Zwischenstück (3) einen Federteller (11) für eine Feder eines Ventils einer Einspritzdüse ausbildet.

7. Verbindung nach einem der Ansprüche 1 bis 6, **dadurch gekennzeichnet, dass** das Zwischenstück (3) einen Hubanschlag für ein Ventilglied eines Ventils einer Einspritzdüse ausbildet.

## Claims

1. Connection of high-pressure-medium-conducting components of an injection device for internal combustion engines, comprising a first component and a second component, the surfaces of which are hardened and which have mutually facing sealing faces, wherein the mutually facing sealing faces (4, 5) of the components (1, 2) interact with sealing faces of an intermediate piece (3) that is arranged between the first and the second component and has a through-bore (7), said intermediate piece (3) being less hard than the sealing faces (4, 5) of the first and second component (1, 2), wherein, of two sealing faces that interact with one another, in each case one sealing face has a sealing edge (6), **characterized in that** the first and the second component (1, 2), including their mutually facing sealing faces (4, 5), are nitrided.

2. Connection according to Claim 1, **characterized in that** the periphery of a conical sealing face (8, 9) forms the sealing edge (6).

3. Connection according to Claim 1 or 2, **characterized in that** the intermediate piece (3) does not exhibit any surface hardening.

4. Connection according to one of Claims 1 to 3, **characterized in that** the sealing rings, formed by encircling sealing edges (6), on the respective components (1, 2) have the same diameter.

5. Connection according to one of Claims 1 to 4, **characterized in that** the intermediate piece (3) has an axial region with a smaller outside diameter, which is introduced into a bore, conducting the high-pressure medium, in the first component, forming a press fit or sliding fit.

6. Connection according to one of Claims 1 to 5, **characterized in that** the intermediate piece (3) forms a spring plate (11) for a spring of a valve of an injection nozzle.

7. Connection according to one of Claims 1 to 6, **characterized in that** the intermediate piece (3) forms a stroke stop for a valve member of a valve of an injection nozzle.

## Revendications

1. Connexion de composants conduisant un fluide haute pression d'un dispositif d'injection de moteurs à combustion interne, comprenant un premier composant et un deuxième composant dont les surfaces sont trempées et qui présentent des surfaces d'étanchéité tournées l'une vers l'autre, les surfaces d'étanchéité tournées l'une vers l'autre (4, 5) des composants (1, 2) coopérant avec des surfaces d'étanchéité d'une pièce intermédiaire (3) disposée entre le premier et le deuxième composant, présentant un alésage traversant (7), qui présente une plus faible dureté que les surfaces d'étanchéité (4, 5) des premier et deuxième composants (1, 2), une surface d'étanchéité parmi deux surfaces d'étanchéité coopérant l'une avec l'autre présentant à chaque fois une arête d'étanchéité (6), **caractérisée en ce que** le premier et le deuxième composant (1, 2) y compris leurs surfaces d'étanchéité tournées l'une vers l'autre (4, 5) sont nitrurés.

2. Connexion selon la revendication 1, **caractérisée en ce que** le bord d'une surface d'étanchéité conique (8, 9) constitue la surface d'étanchéité (6).

3. Connexion selon la revendication 1 ou 2, **caractérisée en ce que** la pièce intermédiaire (3) ne présente pas de durcissement de surface.

4. Connexion selon l'une quelconque des revendications 1 à 3, **caractérisée en ce que** les bagues d'étanchéité formées par des arêtes d'étanchéité périphériques (6) présentent le même diamètre sur les composants respectifs (1, 2).

5. Connexion selon l'une quelconque des revendications 1 à 4, **caractérisée en ce que** la pièce intermédiaire (3) présente une région axiale de faible diamètre extérieur, qui est introduite dans un alésage conduisant le fluide haute pression du premier composant en réalisant un siège de pression ou un siège coulissant.

6. Connexion selon l'une quelconque des revendications 1 à 5, **caractérisée en ce que** la pièce intermédiaire (3) constitue une coupelle de ressort (11) pour un ressort d'une soupape d'une buse d'injection.

7. Connexion selon l'une quelconque des revendications 1 à 6, **caractérisée en ce que** la pièce intermédiaire (3) constitue une butée de course pour un organe de soupape d'une soupape d'une buse d'injection.
